# EUROPÄISCHE PATENTSCHRIFT

(11) **EP 3 999 612 B1**
(45) Veröffentlichungstag und Bekanntmachung des Hinweises auf die Patenterteilung: **11.09.2024**
(21) Anmeldenummer: 20739588.0
(22) Anmeldetag: 03.07.2020
(51) Int. Cl.: C10C 3/02, B01D 11/02

(54) **VERFAHREN ZUM RECYCLING VON ASPHALT**
METHOD FOR RECYCLING ASPHALT
PROCÉDÉ DE RECYCLAGE D'ASPHALTE

(30) Priorität: 17.07.2019 DE 102019119423
(43) Veröffentlichungstag der Anmeldung: 25.05.2022
(73) Patentinhaber: Hemo GmbH, 75443 Ötisheim (DE)
(72) Erfinder: HÖSEL, Peter, 75181 Pforzheim (DE)
(74) Vertreter: LBP Lemcke, Brommer & Partner Patentanwälte mbB
(86) Internationale Anmeldenummer: PCT/EP2020/068863
(87) Internationale Veröffentlichungsnummer: WO 2021/008906

(56) Entgegenhaltungen:
- DE-A1- 4 308 149
- DE-A1- 4 329 178
- JP-A- H07 265 603
- US-A- 4 273 644

## Beschreibung

Die Erfindung betrifft ein Verfahren zum Aufbereiten und Rückgewinnen von Bitumen und Gesteinskörnungen aus Asphalt gemäß dem Oberbegriff des Anspruch 1.

Die Erfindung betrifft weiterhin eine Apparatur zur Durchführung des erfindungsgemäßen Verfahrens gemäß Anspruch 12.

Die folgenden Definitionen zu den Begriffen "Asphalt", "Bitumen", "Teer" und "Gesteinskörnung" sind der Online-Enzyklopädie Wikipedia entlehnt.

Asphalt bezeichnet demnach eine natürliche oder technisch hergestellte Mischung aus dem Bindemittel Bitumen und Gesteinskörnungen, die im Straßenbau für Fahrbahnbefestigungen, im Hochbau für Bodenbeläge, im Wasserbau und seltener im Deponiebau zur Abdichtung verwendet wird. Aus technischen und wirtschaftlichen Gründen sind Asphaltbefestigungen in verschiedenartige Schichten unterteilt. Hierbei werden Asphalttrag-, Asphaltbinder- und Asphaltdeckschichten unterschieden. Je nach Dicke und Lage liefern sie ihren Anteil zur Tragfähigkeit der Gesamtkonstruktion, sofern alle Schichten zu einem kompakten Baukörper verbunden sind. Asphalt verhält sich chemisch nahezu inert (träges Reaktionsverhalten) und weist ein thermoplastisches Verhalten auf.

Bitumen (lateinisch pix tumens, "ausschwitzendes Pech", "Erdpech", "Gräberpech") nach DIN 55946, DIN EN 12597, ist die Bezeichnung für die bei der schonenden Aufbereitung von Erdölen gewonnenen, dunkelfarbigen, halbfesten bis springharten, schmelzbaren, hochmolekularen Kohlenwasserstoff-Gemische und die in Schwefelkohlenstoff löslichen Anteile der natürlichen Asphalte sowie Erdwachs, Montanwachs. Es ist von Rückständen zu unterscheiden, die bei der Pyrolyse kohlenstoffreicher Substanzen zurückbleiben und nicht als Bitumen, sondern als Teer zu bezeichnen sind. Teer unterscheidet sich in der Herstellung und chemischen Zusammensetzung deutlich von Bitumen. Er wird nicht aus Erdöl, sondern vorwiegend aus Braunkohle und Steinkohle gewonnen und enthält einen hohen Anteil an polycyclischen aromatischen Kohlenwasserstoffen (PAK). Da diese sehr gesundheitsschädlich sind, dürfen Teerprodukte in Deutschland nicht mehr als Baustoffe verwendet werden. Gemische aus Teer und Bitumen werden bereits seit den 1980er Jahren nicht mehr im Straßenbau genutzt. Auch mit "Asphalt" dürfen nur bitumenhaltige, also teerfreie Gemische bezeichnet werden.

Als Gesteinskörnung werden im Bauwesen natürliche und künstliche Gesteinskörner bezeichnet. Sie stammen entweder aus natürlichen Lagerstätten oder fallen bei der Wiederverwertung von Baustoffen oder als industrielles Nebenerzeugnis an. Die Gesteine liegen entweder als Rundkorn oder in gebrochener Form vor.

Die Gesteinskörnung wird zusammen mit einem Bindemittel (wie etwa Zement oder Kalk) und Zugabewasser zu Beton und Mörtel verarbeitet. Verbindet man die Gesteinskörnung mit Bitumen, kann Asphalt hergestellt werden. Um die geforderten Eigenschaften des Baustoffs zu erhalten, sind die Gesteinskörnungen entsprechend zusammenzustellen.

Da nur Quarzsande mit bestimmten kompositionellen und texturellen Eigenschaften in der Bauindustrie zur Herstellung von Mörtel und Beton verwendet werden können, wird Sand heute nach Wasser als der nach Volumen zweitwichtigste Rohstoff der Welt betrachtet. Die große Nachfrage führte bereits zu internationalen Konflikten. Auch in Deutschland regt sich lokal zunehmend Widerstand gegen die Ausweitung des Sandabbaus, durch die unter anderem eine unkontrollierte Zerstörung von Landschaft und Ackerflächen befürchtet wird.

Der Bedarf an natürlichen Bausanden könnte durch die bevorzugte Nutzung von recyceltem Bauschutt (sogenannte rezyklierte Gesteinskörnungen) und der feinkörnigen Nebenprodukte aus der Herstellung von Gesteinskörnungen aus Naturstein (Feinsplitt, Brechsand und Gesteinsmehl, engl. zusammengefasst unter der Bezeichnung quarry dust) zur Betonherstellung verringert werden.

Bei der Reparatur von Straßen werden heute regelmäßig die oberen Deckschichten, die Bitumen und Gesteinskörnungen enthalten bzw. daraus gebildet sind, bis zu einer Tiefe von beispielsweise 10 cm abgefräst und in speziellen Deponien endgelagert. Auf diese Weise gehen der (Bau-)Industrie nach dem Vorstehenden wertvolle Rohstoffe verloren.

US 4,273,644 A zeigt eine Vorrichtung und ein Verfahren zur Abtrennung eines Lösungsmittels aus einem bituminösen Material durch Druckreduzierung und Dampfstrippen ohne Verschleppung von mitgerissenem bituminösem Material.

JP H07 265603 A lehrt die Extraktion und Rückgewinnung von bituminösem Material aus Asphalt mit hoher Sicherheit durch Verwendung eines nicht chlorierten organischen Lösungsmittels, wie z.B. eines Zitruslösungsmittels, indem ein Asphalt-Extrakt in einen Destillationsbehälter eingebracht wird, dann der Destillationsbehälter evakuiert wird, ein Lösungsmittelfüllraum in eine unbrennbare Gasatmosphäre verwandelt wird, und dann eine Lösungsmittelextraktion durchgeführt wird.

DE 43 29 178 A1 offenbart ein Verfahren zur Reinigung ("Dampfentfettung") industriell hergestellter Gegenstände.

DE 43 08 149 A1 offenbart ein Verfahren zur Separation von mineralischen Füllstoffen aus bituminösen Baumaterialien, bei dem in einer Wascheinrichtung die bituminösen Baumaterialien als Probe einem Vakuum ausgesetzt und in einer Waschkammer der Wascheinrichtung mit dem Lösemittel überflutet werden. Danach wird die Probe unter Normaldruck mit Ultraschall behandelt und in einem Lösemittel in einer siebförmigen Waschtrommel der Wascheinrichtung bewegt. Anschließend werden mineralische Feststoffe unter Normaldruck von vorhandenem Bindemittel getrennt und abschließend unter Vakuum getrocknet. Als Lösemittel kommen Tri chlorethylen, Trichlorethan, n-Hexan, Aceton Ethyl acetan, Toluol, Methylenchlorid oder dergleichen zum Einsatz.

Der Erfindung liegt die Aufgabe zugrunde, die bei der Reparatur von Straßen mit Asphaltdecke anfallenden Abfallstoffe zu recyceln und somit erneut nutzbar zu machen, um auf diese Weise insbesondere einer zusätzlichen Ausweitung des Erdöl- und Sandabbaus entgegenzuwirken und hohe Deponiekosten einzusparen.

Diese Aufgabe wird erfindungsgemäß gelöst durch ein Verfahren mit den Merkmalen des Anspruch 1 sowie durch eine Apparatur mit den Merkmalen des Anspruchs 12.

Vorteilhafte Weiterbildungen des erfindungsgemäßen Verfahrens bzw. der erfindungsgemäßen Apparatur sind jeweils Gegenstand von Unteransprüchen.

Erfindungsgemäß beinhaltet ein Verfahren zum Rückgewinnen von Bitumen und Gesteinskörnungen aus Asphalt, die folgenden Schritte a) bis f1) bzw. f2), wonach a) der Asphalt grob mechanisch zerkleinert wird, vorzugsweise bis auf eine Korn- oder Klumpengröße von ≤ 5 cm; b) der zerkleinerte Asphalt in eine evakuierte oder evakuierbare Behandlungskammer eingebracht wird; c) die Behandlungskammer evakuiert wird, indem der Druck in der Behandlungskammer auf einen gegenüber dem Umgebungsdruck reduzierten Druck, vorzugsweise 200 mbar oder tiefer, eingestellt wird; d) die Behandlungskammer dann mindestens einmal mit einem flüssigen organischen Lösungsmittel beaufschlagt wird; e) anschließend das flüssige organische Lösungsmittel aus der Behandlungskammer abgezogen wird; und danach f1) das organische Lösungsmittel in der Dampfphase bei dem reduzierten Druck, vorzugsweise einem Druck von 200 mbar oder tiefer, mit einer Temperatur am oder oberhalb des Flammpunktes des organischen Lösungsmittels in die evakuierte Behandlungskammer eingespeist und so die Reinigung durch Kondensation des Lösungsmitteldampfes auf den Asphalt-Rückständen (Gesteinskörnungen) vervollständigt wird; und/oder f2) flüssiges organisches Lösungsmittel in die Behandlungskammer eingespeist wird, vorzugsweise bei einem reduzierten Druck, vorzugsweise einem Druck von 200 mbar oder tiefer, höchst vorzugsweise mit einer Temperatur am oder oberhalb des Flammpunktes des organischen Lösungsmittels. Dabei wird der reduzierte Druck während der Schritte d) bis f1) oder d) bis f2) in der Behandlungskammer aufrechterhalten. Bevorzugt wird für alle betreffenden Schritte immer das gleiche Lösungsmittel verwendet, ggf. nach vorheriger Aufbereitung. Es können aber auch unterschiedliche Lösungsmittel zum Einsatz kommen. Bei Bedarf kann jeder der Schritte auch mehrfach durchgeführt werden, bis das Behandlungsergebnis zufriedenstellend ausfällt. In Schritt f2) kann es sich bei dem eingespeisten flüssigen Lösungsmittel um frisches oder aufbereitetes (speziell destilliertes) Lösungsmittel handeln.

Das vorstehend beschriebene Verfahren gemäß den Schritten c) bis f1) ist grundsätzlich aus der DE 43 29 178 A1 bekannt. Es hat sich jedoch überraschender Weise gezeigt, dass das nur zur Reinigung ("Dampfentfettung") industriell hergestellter Gegenstände vorbekannte Verfahren sich auch zum Recycling von Asphalt eignet, was nicht ohne Weiteres vorhersehbar war. Die aufbereiteten Asphalt-Rückstände (Sand und Steine) können anschließend erneut auf dem (Straßen-)Bausektor verwendet werden, was Ressourcen spart und die Umwelt schont.

Eine erfindungsgemäße Apparatur zur Durchführung des Verfahrens umfasst die evakuierte oder evakuierbare Behandlungskammer, einen Verdampfer, einen Kondensator und eine Vakuumpumpe sowie einen oder mehrere Vorratsbehälter für flüssiges Lösungsmittel, die durch Rohrleitungen und Ventile so verbunden sind, dass ein gegenüber dem Umgebungsdruck reduzierter Druck, vorzugsweise ein Druck von 200 mbar oder weniger, zumindest in der Behandlungskammer und vorzugsweise in der gesamten Anlage aufrechterhalten werden kann, während eine aufeinanderfolgende Spülung der Behandlungskammer mit flüssigem und/oder mit verdampftem Lösungsmittel durchgeführt wird. Weiterhin umfasst die erfindungsgemäße Apparatur auch eine Zerkleinerungs-Vorrichtung für die mechanische Zerkleinerung des Asphalts, um eine möglichst gute Reinigung bzw. Rückgewinnung zu erreichen.

Bei einer vorteilhaften Weiterbildung des erfindungsgemäßen Verfahrens ist vorgesehen, dass im Anschluss an Schritt f1) oder f2) das organische Lösungsmittel aus der Behandlungskammer abgezogen wird; und danach die Behandlungskammer mit kaltem oder heißem Wasser, insbesondere heißem Wasser mit einer Temperatur von mindestens etwa 50°C bis 60°C, vorzugsweise mindestens etwa 80°C, höchst vorzugsweise etwa 100°C, und/oder bei einem gegenüber dem Umgebungsdruck erhöhten Druck beaufschlagt wird, um Lösungsmittelreste zu entfernen.

Bei einer äußerst vorteilhaften Weiterbildung des erfindungsgemäßen Verfahrens ist vorgesehen, dass vor Schritt c) die Behandlungskammer mindestens einmal mit einem flüssigen organischen Lösungsmittel unterhalb des Flammpunktes des organischen Lösungsmittels beaufschlagt wird, bevorzugt bei Umgebungs- oder Atmosphärendruck. Besonders bevorzugt ist die Verwendung von kaltem Lösungsmittel bei einer Temperatur von ≥ 15°C unter dem Flammpunkt und bei Umgebungsdruck. Alternativ kann vor Schritt c) die Behandlungskammer evakuiert werden, vorzugsweise bis zu einem Druck von 200 mbar oder tiefer, und mindestens einmal mit einem flüssigen organischen Lösungsmittel oberhalb des Flammpunktes des organischen Lösungsmittels beaufschlagt wird. Dabei liegt bevorzugt die Temperatur unterhalb der Azeotroptemperatur.

Auf diese Weise kann in dem (zerkleinerten) Asphalt enthaltenes Wasser (die "natürliche" Restfeuchte kann etwa 3% betragen) entweder mit Hilfe des (kalten) Lösungsmittels ausgetrieben oder mittels des heißen Lösungsmittels verkocht werden. Alternativ kommt ansonsten noch ein rein thermisches Austreiben (Auskochen oder mit Heißluft, optional mit anschließender (Vakuum-)Trocknung) in Betracht, was jedoch energetisch ungünstiger ist. Während kaltes Lösungsmittel unter Umgebungsdruck oder unter Vakuum angewendet werden kann, ist bei der Verwendung von heißem Lösungsmittel immer der Einsatz von Vakuum ratsam.

Alternativ oder zusätzlich kann vor Schritt c) oder Schritt d) der zerkleinerte Asphalt mit kaltem oder heißem Wasser, insbesondere heißem Wasser mit einer Temperatur von mindestens etwa 50°C bis 60°C, vorzugsweise mindestens etwa 80°C, höchst vorzugsweise etwa 100°C, und/oder bei einem gegenüber dem Umgebungsdruck erhöhten Druck beaufschlagt werden, vorzugsweise in der Reinigungskammer. Auf diese Weise kann das Bitumen vor dem eigentlichen Reinigungsprozess herausgelöst (verflüssigt) und separat rückgewonnen werden. Dies kann in der Behandlungskammer selbst oder an einem anderen Ort (z.B. in einer Vor-Behandlungskammer) erfolgen.

Zur Deckung des Energiebedarfs kann in allen Fällen (insbesondere zum Erwärmen von Wasser und/oder Lösungsmittel und/oder für die Trocknung) Wärme aus der thermischen Verwertung von anfallendem Bitumen verwendet werden, worauf weiter unten noch eingegangen wird. Dies schließt auch die Destillation von "verbrauchtem" Lösungsmittel mit ein: der hierbei entstehende Dampf kann zu Heizzwecken innerhalb der Apparatur verwendet werden; das Kondensat kann als frisches Lösungsmittel dem Verfahren wieder zugeführt werden.

Bei einer vorteilhaften Weiterbildung des erfindungsgemäßen Verfahrens ist in diesem Kontext vorgesehen, dass das rückgewonnene Bitumen als Brennstoff verwendet wird, insbesondere zum Erwärmen des zur Bitumengewinnung zugesetzten Wassers oder des Lösungsmittels in Schritt f1) bzw. f2).

In allen Fällen, in denen im Rahmen der Beschreibung die Verwendung von Lösungsmittel erwähnt ist, kann es sich immer um dasselbe Lösungsmittel - ggf. nach einer Aufbereitung - oder um dieselbe Art von Lösungsmittel handeln. Es können jedoch für die einzelnen Schritte auch unterschiedliche Lösungsmittel Verwendung finden. Der Begriff "Lösungsmittel" umfasst auch Mischungen aus mindestens zwei verschiedenen Lösungsmitteln.

In allen Fällen, in denen im Rahmen der Beschreibung die Verwendung von Vakuum oder eine Evakuierung/Druckabsenkung erwähnt ist, kann alternativ auch eine andere Form von "Inertisierung" eingesetzt werden, z.B. die Beaufschlagung mit einer Stickstoff- oder Wasserdampf-Atmosphäre. Es können auch für die einzelnen Schritte unterschiedliche Inertisierungen Verwendung finden. Der Begriff "Inertisierung" bedeutet, dass äußere Umstände geschaffen werden, die einer Entzündung oder gar Explosion des Lösungsmittels bzw. eines Luft-Lösungsmittelgemisches entgegenwirken.

Eine erste Weiterbildung der erfindungsgemäßen Apparatur umfasst entsprechend wenigstens eine Zuleitung oder einen Vorratsbehälter für Wasser, insbesondere heißes Wasser, in fluidtechnischer Wirkverbindung mit der Behandlungskammer und/oder einer Vor-Behandlungskammer für den zerkleinerten Asphalt.

Bei einer anderen vorteilhaften Weiterbildung des erfindungsgemäßen Verfahrens ist dementsprechend vorgesehen, dass vor Schritt c) oder Schritt d) verflüssigtes Bitumen abgeführt und rückgewonnen wird. Auch dies trägt zur Schonung von Ressourcen und zur Entlastung der Umwelt bei.

Eine zweite Weiterbildung der erfindungsgemäßen Apparatur umfasst hierzu eine Abführ-Vorrichtung für aufschwimmendes, flüssiges Bitumen aus der Behandlungskammer und/oder der Vor-Behandlungskammer.

Es wurde bereits erwähnt, dass das rückgewonnene Bitumen vorteilhafter Weise als Brennstoff verwendet werden kann, insbesondere zum Erwärmen des zur Bitumengewinnung zugesetzten Wassers oder des Lösemittels in den Schritten f1) bzw. f2).

Eine dritte Weiterbildung der erfindungsgemäßen Apparatur umfasst hierzu eine thermische Verwertungseinrichtung für das Bitumen, insbesondere zur Erwärmung des zur Bitumengewinnung zugesetzten Wassers oder des Lösungsmittels in Schritt f1) bzw. f2) bzw. allgemein zur Energiegewinnung. Bevorzugt kommt hierfür ein Blockheizkraftwerk zur Stromerzeugung zum Einsatz. Durch thermische Verwertung des Bitumens können insbesondere gesundheitsschädliche polycyclische aromatische Kohlenwasserstoffe (PAK) wirksam eliminiert werden.

Vorzugsweise wird das rückgewonnene Bitumen erst nach wenigstens einer vorherigen Destillation (zu Reinigungszwecken) thermisch verwertet, um potentiell gesundheitsschädliche Verbindungen abzutrennen und zu beseitigen.

Bei einer anderen Weiterbildung des erfindungsgemäßen Verfahrens ist vorgesehen, dass vor Schritt c) oder d) das optional zur Bitumengewinnung zugesetzte (heiße) Wasser abgezogen wird, um anschließend das eigentliche Reinigungsverfahren ungestört durchführen zu können.

Bei einer wieder anderen Weiterbildung des erfindungsgemäßen Verfahrens ist vorgesehen, dass im Anschluss an Schritt f1) bzw. f2) die Behandlungskammer (erneut) mit Wasser beaufschlagt wird. Hierdurch lässt sich die Reinigungswirkung günstig beeinflussen.

Bei noch einer anderen Weiterbildung des erfindungsgemäßen Verfahrens ist vorgesehen, dass - vorzugsweise vor Schritt b) - eine Größenfraktion mit Teilchengröße < 1 mm (d.h. feinkörniger Sand) abgetrennt wird, vorzugsweise mittels eines Siebs, und getrennt erfindungsgemäß behandelt wird. Es hat sich nämlich in der Praxis gezeigt, dass die genannte Größenfraktion eine aufwändigere Behandlung benötigt, als gröbere Klumpen oder Brocken; ggf. wird die erfindungsgemäße Behandlung - insbesondere gemäß der Schritte c) bis e) - für den Sand mehrfach wiederholt. Sie kann grundsätzlich in derselben Kammer erfolgen, wie die Behandlung der gröberen Fraktion.

Bei einer darauf aufbauenden Weiterbildung des erfindungsgemäßen Verfahrens ist vorgesehen, dass die abgetrennte und separat behandelte Größenfraktion (der Sand) vor Schritt f1) oder f2) dem restlichen Asphalt wieder beigegeben wird. Das Behandlungsverfahren kann dann gemeinsam für alle Größenfraktionen beendet werden.

In Weiterbildung des erfindungsgemäßen Verfahrens kann auch vorgesehen sein, dass ein Inneres der Behandlungskammer, vorzugsweise während wenigstens einem der Schritte d), f1, f2) oder der Schritte gemäß Anspruch 3, mit Ultraschall beaufschlagt wird. Dies sorgt für eine schonende Bewegung des Behandlungsguts, ohne dass es zu einem Rundschleifen von Sandkörnern käme, was zu vermeiden ist, um den rückgewonnenen Sand zu Bauzwecken einsetzen zu können.

Die erfindungsgemäße Apparatur kann bei entsprechender Weiterbildung (in der Behandlungskammer) wenigstens ein Sieb bzw. einen Siebkorb und/oder (in Wirkverbindung mit der Behandlungskammer) eine Einrichtung zum Einkoppeln vom Ultraschall in die Behandlungskammer aufweisen.

Bei einer ebenfalls vorteilhaften Weiterbildung des erfindungsgemäßen Verfahrens ist vorgesehen, während der Schritte c) bis f1) bzw. f2) ein absoluter Druck von 125 mbar oder weniger in der Behandlungskammer aufrechterhalten wird. Dies hat sich als besonders effektiv erwiesen.

Bei einer weiteren, vorteilhaften Weiterbildung des erfindungsgemäßen Verfahrens ist vorgesehen, dass das organische Lösungsmittel mehr als 50 Gew.-% eines aliphatischen Kohlenwasserstoffes mit 5 bis 15 Kohlenstoffen, eines aromatischen Kohlenwasserstoffes, einer sauerstoffhaltigen organischen Verbindung, eines zyklischen Siloxans oder einer Mischung von zwei oder mehr solcher Verbindungen enthält, bezogen auf das Gesamtgewicht des organischen Lösungsmittels. Hierdurch wird eine besonders gute Reinigungswirkung erzielt.

Bei einer wieder anderen Weiterbildung des erfindungsgemäßen Verfahrens ist vorgesehen, dass das organische Lösungsmittel halogenfrei ist. Dies ist nicht zuletzt aus Gründen des Umweltschutzes vorteilhaft.

Bei einer besonders vorteilhaften Weiterbildung des erfindungsgemäßen Verfahrens ist vorgesehen, dass das organische Lösungsmittel einen Flammpunkt von 10°C bis 100°C hat.

Bei einer anderen Weiterbildung des erfindungsgemäßen Verfahrens ist vorgesehen, dass nach der Reinigung in der Dampfphase die Asphalt-Rückstände, insbesondere die Gesteinskörnungen, in einem weiteren Schritt getrocknet werden, worin der Absolutdruck in der Behandlungskammer auf die Hälfte oder weniger des Druckes reduziert wird, der während der Reinigung in der Dampfphase, insbesondere während der Schritte c) bis f), aufrechterhalten wird.

Die nachfolgende allgemeine Beschreibung ist der DE 43 29 178 A1 entlehnt, die auf eine Rechtsvorgängerin der vorliegenden Anmelderin zurückgeht und auf die ansonsten vollumfänglich Bezug genommen wird. Wenn im Folgenden von "Gegenstand" oder von "Gegenständen" die Rede ist, meint dies im Rahmen der vorliegenden Erfindung die Bestandteile (Rückstände) des zu rezyklierenden Asphalts, insbesondere dessen Gesteinsbestandteile (Gesteinskörner oder -Körnungen bzw. Steine und/oder Sand).

Es wurde gefunden, dass nach dem vorgeschlagenen Verfahren ein oder mehrere Gegenstände sicher in der Dampfphase eines organischen Lösungsmittels gereinigt werden können, sogar wenn die Reinigung bei einer Temperatur beim oder über dem Flammpunkt des organischen Lösungsmittels durchgeführt wird. Der Einfachheit halber bezieht sich die folgende Beschreibung auf die Reinigung von "Gegenständen", obwohl das erfindungsgemäße Verfahren nicht auf die Reinigung mehrerer Gegenstände beschränkt ist, sondern sich zur Reinigung eines einzigen Gegenstandes gleichermaßen eignet.

Der Flammpunkt eines organischen Lösungsmittels wird im Allgemeinen bei Atmosphärendruck gemessen. Die hier verwendete Definition des Flammpunktes bedeutet die niedrigste Temperatur eines Lösungsmittels, bei der das Gemisch aus Lösungsmitteldampf und Luft über dem Lösungsmittel nach den Standardverfahren nach DIN 51755, DIN 51758 oder DIN 53213 entzündet werden kann. Im Falle einer Explosion des organischen Lösungsmittels ist der entstehende Druck nicht höher als etwa 8-mal der ursprüngliche Druck in der Behandlungskammer. Indem ein Absolutdruck von 200 mbar oder weniger, vorzugweise von 125 mbar oder weniger, insbesondere von 100 mbar oder weniger in der Behandlungskammer aufrechterhalten wird, ist es nicht notwendig, die Reinigung in einer teuren Apparatur durchzuführen, die hohe Drücke aushält oder die teure explosionsgeschützte Instrumente enthält. Aus wirtschaftlichen Gründen wird das erfindungsgemäße Reinigungsverfahren so durchgeführt, dass der absolute Druck in der Behandlungskammer im allgemeinen nicht weniger als 1 mbar, vorzugweise nicht weniger als 10 mbar und insbesondere nicht weniger als 40 mbar beträgt. Mit dem angegebenen Druck ist der vorherrschende Druck während des Reinigungsverfahrens in der Dampfphase gemeint.

Zusätzlich zu den beschriebenen Sicherheitsvorteilen wurde gefunden, dass mit dem vorgeschlagenen Verfahren sehr reine Gegenstände erhalten werden können und die gereinigten Gegenstände in effizienter Weise rasch und gründlich getrocknet werden können. Es ist wichtig, die Gegenstände bei einer Temperatur beim oder über dem Flammpunkt des organischen Lösungsmittels zu behandeln, um eine sehr effiziente Reinigung und nachfolgendes Trocknen der Gegenstände erreichen zu können. Wenn die Temperatur zu niedrig ist, ist die Reinigung weniger wirksam und das Trocknen unvollständig oder das Trocknen der gereinigten Gegenstände dauert unerwünscht lange. Innerhalb der vorgegebenen Druckgrenzen wird das vorgeschlagene Verfahren vorzugsweise mindestens 10°C, besonders bevorzugt mindestens 20°C über dem Flammpunkt des organischen Lösungsmittels durchgeführt. Vorzugsweise wird das erfindungsgemäße Verfahren bei einer Temperatur bis zu 120°C, besonders bevorzugt bis zu 100°C, insbesondere bis zu 80°C durchgeführt.

Mindestens ein Teil der Reinigung wird beim vorgeschlagenen Verfahren in der Dampfphase eines organischen Lösungsmittels durchgeführt. Der hier verwendete Ausdruck "ein organisches Lösungsmittel" umfasst unverdünnte organische Lösungsmittel sowie Gemische von zwei oder mehr organischen Verbindungen, die allgemein von den Fachleuten als organische Lösungsmittel bezeichnet werden, sowie Mischungen einer oder mehrerer solcher organischen Verbindungen mit Wasser. Wenn ein Lösungsmittelgemisch verwendet wird, enthält das Gemisch vorzugsweise mehr als 50%, besonders bevorzugt mehr als 70%, insbesondere mehr als 95% eines halogenfreien organischen Lösungsmittels, bezogen auf das Gesamtgewicht des Gemisches. Am vorteilhaftesten wird ein gänzlich halogenfreies organisches Lösungsmittel zur Reinigung verwendet. Wenn das verwendete Lösungsmittelgemisch Wasser enthält, enthält es vorzugsweise weniger als 80% Wasser, besonders bevorzugt weniger als 50% Wasser, insbesondere weniger als 30% Wasser, basierend auf das Gesamtgewicht der Mischung. Das vorgeschlagene Reinigungsverfahren ist besonders geeignet für ein organisches Lösungsmittel, das einen Flammpunkt hat, der unterhalb seines Siedepunktes bei Atmosphärendruck liegt und das einen Siedepunkt von 100°C oder weniger bei einem Absolutdruck von 1 mbar oder mehr aufweist. Bevorzugt sind aliphatische Kohlenwasserstoffe, die 5 bis 15 Kohlenstoffatome enthalten, wie z.B. zyklische gesättigte Kohlenwasserstoffe und geradkettige oder verzweigte gesättigte oder ungesättigte Kohlenwasserstoffe, vorzugsweise Cycloalkane, n-Paraffine, Isoparaffine oder Stoddardsolvent, oder aromatische Kohlenwasserstoffe, wie z.B. Toluol oder Xylol, oder sauerstoffhaltige organische Verbindungen, wie z.B. Alkohole, vorzugsweise Isopropanol, Ester, vorzugsweise Alkyllactate oder dibasische Ester, wie z.B. kommerziell erhältliche Mischungen von dibasischen Estern, Ether, vorzugsweise Diethylether, Ketone, vorzugsweise Aceton oder Methylethylketon, oder Hydroxyether, vorzugsweise Alkoxypropanole oder Alkoxyethanole, zyklische Siloxane, die vorzugsweise von 6 bis 8 Ringatome enthalten, oder eine Mischung von zwei oder mehr solcher Verbindungen. Die Lösungsmittel, die im erfindungsgemäßen Verfahren besonders bevorzugt verwendet werden, haben einen Flammpunkt im Bereich von 10°C bis 100°C, vorzugsweise von 40°C bis 100°C.

Wenn Gegenstände in einer Behandlungskammer in der Dampfphase eines organischen Lösungsmittels gereinigt werden, beinhaltet der ganze Prozess gemäß einer Ausgestaltung der Erfindung u.a. die folgenden Schritte:
i) die zu behandelnden Gegenstände werden in die Behandlungskammer gebracht und die Behandlungskammer wird geschlossen;
ii) gegebenenfalls wird der Druck in der Behandlungskammer auf Atmosphärendruck oder tiefer eingestellt, vorzugweise auf 200 mbar oder tiefer, insbesondere auf 125 mbar oder tiefer, besonders bevorzugt auf 100 mbar oder tiefer, und die Gegenstände werden mit flüssigem Lösungsmittel vorgereinigt;
iii) der Druck in der Behandlungskammer wird auf 200 mbar oder tiefer, insbesondere auf 125 mbar oder tiefer, besonders bevorzugt auf 100 mbar oder tiefer eingestellt;
iv) Lösungsmitteldampf wird in die evakuierte Behandlungskammer eingespeist, wobei in der Behandlungskammer ein absoluter Druck von 200 mbar nicht überschritten wird, und die Gegenstände werden durch Kondensation des Lösungsmitteldampfes auf den Gegenständen gereinigt;
v) die gereinigten Gegenstände werden getrocknet und die Konzentration des Lösungsmitteldampfes wird in der Behandlungskammer reduziert; und
vi) der Druck in der Behandlungskammer wird erhöht und die Behandlungskammer entladen.

Schritt i) kann auf bekannte Art durchgeführt werden. Die Gegenstände können z.B. in Behälter wie Körbe etc. gelegt werden.

Gegebenenfalls wird Schritt ii) durchgeführt. Er kann ebenfalls auf bekannte Art durchgeführt werden. Es können bekannte Vakuumpumpen eingesetzt werden, um die gewünschte Druckreduktion zu erreichen. Solche Vakuumpumpen werden hier nicht im Detail beschrieben. Die Behandlungskammer wird vorzugsweise mit einem flüssigen Lösungsmittel überflutet, um die Gegenstände vorzubehandeln. Vorzugsweise wird die Behandlungskammer dadurch überflutet, dass flüssiges Lösungsmittel von einem Vorratsbehälter in die Behandlungskammer gepumpt wird. Wenn die Gegenstände gereinigt sind, wird das Lösungsmittel vorzugsweise von der Behandlungskammer in den Vorratstank zurückgebracht. Gewünschtenfalls können diese Schritte, d.h. Überfluten der Behandlungskammer mit flüssigem Lösungsmittel, Reinigung der Gegenstände und Entleeren des flüssigen Lösungsmittels aus der Behandlungskammer, einmal oder mehrere Male wiederholt werden. In diesem Fall wird vorzugsweise frisches Lösungsmittel von einem anderen Vorratsbehälter in die Behandlungskammer gespeist. Pumpen zum Füllen und Entleeren der Behandlungskammer sind bekannt. Wenn im Schritt ii) ein Druck erreicht wird, der höher als 125 mbar ist, wird die Temperatur des flüssigen Lösungsmittels bevorzugt so eingestellt, dass sie mindestens 15°C niedriger als der Flammpunkt des Lösungsmittels ist. Die Temperatur des Lösungsmittels, das in die Behandlungskammer gespeist wird, ist im Allgemeinen mindestens 10°C niedriger, vorzugsweise mindestens 20°C niedriger als die Temperatur des Lösungsmitteldampfes, der im Schritt d) in die Behandlungskammer gespeist wird. Wie oben erwähnt, ist die Vorbehandlung mit flüssigem Lösungsmittel kein zwingendes Verfahrensmerkmal. Wenn die Gegenstände mit flüssigem Lösungsmittel vorgereinigt werden, ist es im Allgemeinen ratsam, den Druck in der Behandlungskammer in zwei Schritten zu regulieren, d.h. vor und nach der Vorbehandlung. Wenn keine Vorbehandlung durchgeführt wird, kann die Behandlungskammer im Allgemeinen in einem einzigen Schritt evakuiert werden, bevor Lösungsmitteldampf in die Behandlungskammer gespeist wird.

Im Schritt iii) kann auf bekannte Weise evakuiert werden. Bevor Lösungsmitteldampf in die Behandlungskammer gespeist wird, ist der gewünschte absolute Enddruck darin gleich oder tiefer als der absolute Druck des Dampfes, der im Schritt iv) in die Behandlungskammer gespeist wird.

Im Dampfphasenreinigungsschritt iv) wird Lösungsmitteldampf in die Behandlungskammer gespeist, in der ein absoluter Druck von 200 mbar, vorzugsweise von 125 mbar, insbesondere von 100 mbar nicht überschritten wird. Der Lösungsmitteldampf wird vorzugsweise in einem Verdampfer erzeugt und in die Behandlungskammer gespeist. Der absolute Druck ist im Verdampfer gleich oder höher als der Druck, der in der Behandlungskammer vorherrscht, bevor Lösungsmitteldampf eingespeist wird. Der absolute Druck ist im Verdampfer jedoch nicht höher als 200 mbar, vorzugsweise nicht höher als 125 mbar, insbesondere nicht höher als 100 mbar. Der Lösungsmitteldampf hat vorzugsweise eine Temperatur, die gleich oder höher als der Flammpunkt des verwendeten organischen Lösungsmittels ist. Die zu behandelnden Gegenstände haben im allgemeinen eine Anfangstemperatur, die niedriger ist als die Temperatur des Lösungsmitteldampfes. Vorzugsweise haben sie eine Temperatur zwischen Raumtemperatur und 10°C unterhalb der Temperatur des Lösungsmitteldampfes, insbesondere zwischen Raumtemperatur und 20°C unterhalb der Temperatur des Lösungsmitteldampfes. Diese niedrigere Temperatur bewirkt, dass mindestens ein Teil des Lösungsmitteldampfes auf der Oberfläche der Gegenstände kondensiert. Die Temperatur der Gegenstände steigt normalerweise während der Reinigung in der Dampfphase in Abhängigkeit von der Wärmeübertragung zwischen dem Dampf und den Gegenständen. Wenn der Reinigungsschritt d) in der Dampfphase abgeschlossen ist, hat mindestens die Oberfläche der Gegenstände im allgemeinen etwa die gleiche Temperatur wie der Lösungsmitteldampf. Überschüssiger Lösungsmitteldampf kann aus der Behandlungskammer entfernt und z.B. auf bekannte Art in einem Kondensator kondensiert werden. Das kondensierte Lösungsmittel kann zurückgewonnen und weiterbehandelt werden. Das kondensierte Lösungsmittel kann z.B. zur Weiterverwendung in den Verdampfer oder in einen oder mehrere Vorratsbehälter gebracht werden.

Nach dem Reinigungsschritt iv) in der Dampfphase werden die gereinigten Gegenstände in der Regel getrocknet, Schritt v). Es ist vorteilhaft, den Druck in der Behandlungskammer zu senken. Während des Trocknungsschrittes ist der Druck vorzugsweise die Hälfte, besonders bevorzugt ein Fünftel und insbesondere ein Zehntel des Druckes, der während des Reinigungsschrittes iv) aufrechterhalten wird. Die Druckerniedrigung erleichtert ein rasches Verdampfen von überschüssigem Lösungsmittel, das an der Oberfläche der gereinigten Gegenstände haftet. Es wurde gefunden, dass das Trocknen sogar noch effizienter ist, wenn der Druck sehr rasch erniedrigt wird, z.B. wenn eine Verbindung, wie z.B. ein Ventil, zwischen der Behandlungskammer und einem evakuierten Behälter geöffnet wird. Durch den niedrigen Dampfdruck des Lösungsmittels werden auch allzu hohe Lösungsmittelemissionen verhindert, wenn die Behandlungskammer entladen wird. Die entfernten Lösungsmitteldämpfe können z.B. auf bekannte Weise in einem Kondensator kondensiert und/oder adsorbiert werden. Das kondensierte und/oder adsorbierte Lösungsmittel kann zurückgewonnen und weiterbehandelt werden. Der kondensierte Lösungsmitteldampf kann z.B. zur Weiterverwendung in den Verdampfer oder in einen oder mehrere Vorratsbehälter gebracht werden.

Hinsichtlich der verwendeten Apparatur sollten die Behandlungskammer und der Verdampfer evakuierbar sein, d.h. sie sollten so konstruiert sein, dass sie evakuiert werden können. Der Verdampfer dient dazu, das organische Lösungsmittel zu erhitzen und Lösungsmitteldampf unter reduziertem Druck zu erzeugen. Die Behandlungskammer und der Verdampfer können mit Hilfe der Vakuumpumpe evakuiert werden. Die erfindungsgemäße Apparatur enthält auch einen Kondensator. Der Kondensator hat die eine Funktion, überschüssiges Lösungsmittel zu kondensieren, das im oben beschriebenen Reinigungsschritt iv) in der Dampfphase und/oder im Trocknungsschritt v) aus der Behandlungskammer entfernt wird. Allenfalls kann der Kondensator zusammen mit dem Verdampfer auch dazu verwendet werden, das organische Lösungsmittel zu destillieren.

Die erfindungsgemäße Apparatur enthält zusätzlich einen oder mehrere Vorratsbehälter für das flüssige Lösungsmittel. Der oder die Vorratsbehälter sollten evakuierbar sein, d.h. sie sollten so konstruiert sein, dass sie evakuiert werden können. Der oder die Vorratsbehälter können auf bekannte Art mit der Behandlungskammer verbunden sein.

Der Kondensator ist vorzugsweise ebenfalls mit dem oder den Vorratsbehälter(n) verbunden. Im Vorratsbehälter können die Gegenstände mit flüssigem Lösungsmittel vorgereinigt werden und kondensiertes Lösungsmittel aus Kondensator und/oder aus der Behandlungskammer kann gesammelt werden. Die erfindungsgemäße Apparatur enthält auch ein Leitungssystem, das mit Ventilen ausgerüstet ist, die hier nicht im Detail beschrieben werden.

Weitere Eigenschaften und Vorteile der Erfindung ergeben sich aus der nachfolgenden Beschreibung von Ausführungsbeispielen anhand der Zeichnung.

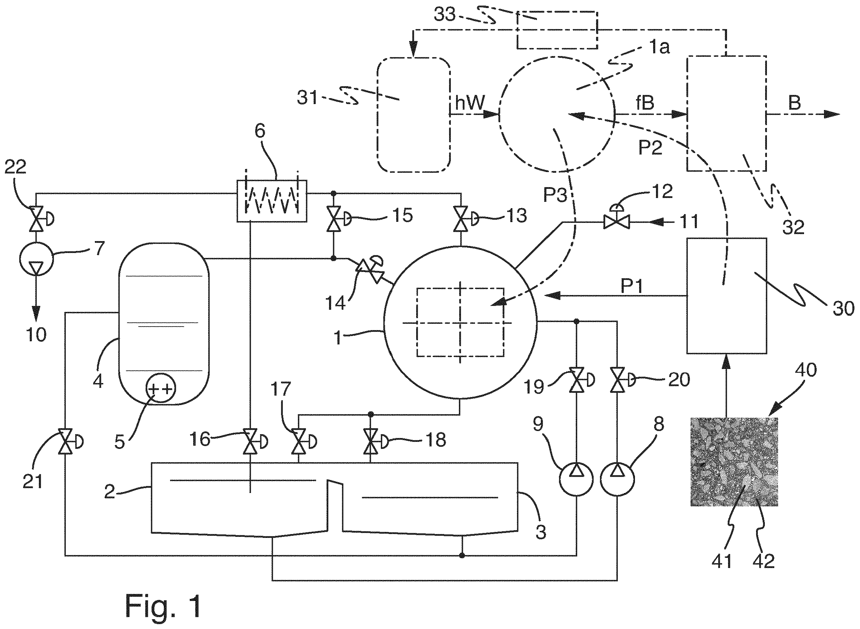

Figur 1 zeigt eine schematische Darstellung einer bevorzugten Ausführungsform der erfindungsgemäßen Apparatur.

Die Apparatur enthält eine Behandlungskammer 1, optional (strich-punktiert gekennzeichnet) eine Vor-Behandlungskammer 1a, zwei Vorratsbehälter 2 und 3, einen Verdampfer 4, eine Heizvorrichtung 5 und einen Kondensator 6. Sie sind mittels eines Leitungssystems verbunden, das mit einer Vakuumpumpe 7, zwei Pumpen 8 und 9 und Ventilen 12, 13, 14, 15, 16, 17, 18, 19, 20, 21 und 22 versehen ist. Zuluft 11 kann in die Behandlungskammer 1 gespeist werden. Abgas 10 kann mit Hilfe der Vakuumpumpe 7 aus der Apparatur entfernt werden.

Weiterhin optional vorhanden und entsprechend strich-punktiert eingezeichnet sind ein Vorratsbehälter 31 für Wasser, insbesondere heißes Wasser hW, in fluidtechnischer Wirkverbindung mit der Behandlungskammer 1 und/oder der Vor-Behandlungskammer 1a, je nach Ausgestaltung der Apparatur. Diese kann weiterhin eine Abführ-Vorrichtung 32 für aufschwimmendes, flüssiges Bitumen fB aus der Behandlungskammer 1 und/oder der Vor-Behandlungskammer 1a umfassen, welches durch die Einwirkung des heißen Wassers hW aus dem Asphalt gelöst werden kann. Bei Bezugszeichen 30 ist eine Zerkleinerungs-Vorrichtung für die mechanische Zerkleinerung des Asphalts 40 dargestellt, bevor dieser in die Behandlungskammer 1 und/oder (vorab) in die Vor-Behandlungskammer 1a eingebracht wird. Der Asphalt 40 beinhaltet bei Bezugszeichen 41 Gesteinskörner und bei Bezugszeichen 42 Bitumen. Das Bitumen 42 kann vorteilhafterweise schon in der Vor-Behandlungskammer 1a durch den Einsatz heißen Wassers hW größtenteils zurückgewonnen werden, bevor in der Behandlungskammer 1 die Endreinigung der Gesteinskörner (Steine und Sand) 41 erfolgt.

Weiterhin umfasst die Apparatur optional eine thermische Verwertungs-/Verbrennungseinrichtung 33 für das aus der Behandlungskammer 1 und/oder der Vor-Behandlungskammer 1a abgeführte Bitumen fB, insbesondere aber nicht ausschließlich zur Erwärmung des Wassers hW im Vorratsbehälter 31. Ganz allgemein kann das anfallende Bitumen innerhalb oder außerhalb der Anlage zur Energiegewinnung genutzt werden. Auch eine Verwertung in einem Blockheizkraftwerk oder dergleichen, insbesondere zur Stromerzeugung, kommt in Betracht.

Pfeil P1 zeigt das direkte Einbringen des (zerkleinerten) Asphalts 40 in die Behandlungskammer 1; alternativ zeigen die Pfeile P2 und P3 den beschriebenen "Umweg" über die Vor-Behandlungskammer 1a. Pfeil B deutet an, dass bei 32 rückgewonnenes Bitumen abgeführt und anderweitig wiederverwendet werden kann.

Ansonsten funktioniert die Apparatur, wie bereits in der DE 43 29 178 A1 beschrieben. Wenn im Folgenden von "Gegenständen" die Rede ist, meint dies wiederum die vorstehend definierten Asphalt-Bestandteile.

Bevor die Reinigungsapparatur einsatzbereit ist, wird flüssiges Lösungsmittel in den Verdampfer 4 gefüllt. Alle Ventile sind geschlossen. Dann werden die Ventile 13, 15, 17 und 22 geöffnet, um die ganze Apparatur mit Hilfe der Vakuumpumpe 7 zu evakuieren. Wenn der gewünschte Druck erreicht ist, wird mit der Destillation des flüssigen Lösungsmittels im Verdampfer 4 begonnen. Die Ventile 13 und 17 werden geschlossen und die Ventile 15 und 16 geöffnet. Die Heizvorrichtung 5 wird eingeschaltet, um das Lösungsmittel zu verdampfen. Der Lösungsmitteldampf wird in den Kondensator 6 gebracht. Das kondensierte Lösungsmittel fließt in den Vorratsbehälter 2. Der Überlauf des Vorratsbehälters 2 fließt in den Vorratsbehälter 3. Wenn nötig wird flüssiges Lösungsmittel vom Vorratsbehälter 3 in den Verdampfer gespeist; dazu wird das Ventil 21 nach Bedarf abwechslungsweise geöffnet und geschlossen. Während der Destillation kann der Druck in der Reinigungsapparatur mit Hilfe der Vakuumpumpe 7 und des Ventils 22 kontrolliert werden, das abwechslungsweise geöffnet und geschlossen wird.

Die Reinigungsapparatur ist dann einsatzbereit. Das Ventil 12 wird geöffnet und Zuluft 11 wird in die Behandlungskammer 1 gespeist, bis die Behandlungskammer Atmosphärendruck hat. In einem ersten Schritt i) wird die Behandlungskammer geöffnet, mit den zu behandelnden Gegenständen beladen und wieder geschlossen. In einem zweiten Schritt ii) wird Ventil 12 geschlossen und die Ventile 13 und 22 werden geöffnet, um die Behandlungskammer mit Hilfe der Vakuumpumpe 7 bis zum gewünschten Druck zu evakuieren. Im Vorbehandlungsschritt iii) wird das Ventil 19 geöffnet und flüssiges Lösungsmittel wird mit Hilfe der Pumpe 9 vom Vorratsbehälter 3 in die Behandlungskammer 1 gepumpt. Die Reinigungswirkung kann erhöht werden, indem man die Gegenstände mechanisch bewegt und/oder (bevorzugt, um ein Rundschleifen von Sandkörnern zu vermeiden) Ultraschallwellen in der Behandlungskammer erzeugt. Das Ventil 19 wird geschlossen. Wenn dieser Waschprozess beendet ist, wird das Ventil 18 geöffnet und das verunreinigte flüssige Lösungsmittel in den Vorratsbehälter 3 gebracht. Das verunreinigte flüssige Lösungsmittel kann dann in den Verdampfer 4 gebracht werden, der immer noch in Betrieb ist. Das Ventil 18 wird geschlossen. Das Ventil 20 wird geöffnet und flüssiges Lösungsmittel wird vom Vorratsbehälter 2 mit Hilfe der Pumpe 8 in die Behandlungskammer 1 gepumpt, um eine zweite Vorbehandlung mit flüssigem Lösungsmittel durchzuführen. Das Ventil 20 wird geschlossen. Wenn der zweite Waschprozess beendet ist, wird das Ventil 17 geöffnet und das verunreinigte flüssige Lösungsmittel wird in den Vorratsbehälter 2 gebracht, von wo es in den Vorratsbehälter 3 überläuft. Während und nach dem Vorbehandlungsschritt c) kann der Druck in der Behandlungskammer 1 mit Hilfe der Vakuumpumpe 7 kontrolliert werden, wobei das Ventil 22 abwechslungsweise geöffnet und geschlossen wird. Während den oben beschriebenen Schritten i)-iii) wird das flüssige Lösungsmittel im Verdampfer 4 fortwährend destilliert.

Die Ventile 15 und 17 werden geschlossen und das Ventil 14 wird geöffnet, damit mit dem Reinigungsschritt d) in der Dampfphase begonnen werden kann. Die Destillation des flüssigen Lösungsmittels wird dazu unterbrochen. Lösungsmitteldampf wird via das geöffnete Ventil 14 in die Behandlungskammer gespeist, wo es auf den Gegenständen kondensiert, bis ihre Oberfläche die gleiche Temperatur hat wie der Lösungsmitteldampf. Das Ventil 14 wird dann geschlossen und die Ventile 15 und 17 werden geöffnet. Das kondensierte Lösungsmittel fließt in den Vorratsbehälter 2.

Vor dem Trocknungsschritt v) werden die Ventile 15, 16 und 17 geschlossen. Der Druck in der Behandlungskammer 1 wird mit Hilfe der Vakuumpumpe 7 weiter erniedrigt, wobei das Ventil 22 abwechslungsweise geöffnet und geschlossen wird. Dabei werden die gereinigten Gegenstände getrocknet. Nach dem Trocknungsschritt v) wird der Druck in der Behandlungskammer dem Druck in den anderen Teilen der Reinigungsapparatur angeglichen, indem das Ventil 22 geschlossen wird und eine kontrollierte Menge Frischluft via das Ventil 12 in die Behandlungskammer gespeist wird. Die Ventile 15 und 16 werden geöffnet, damit die Destillation des flüssigen Lösungsmittels fortgesetzt werden kann. Das Ventil 22 wird so weit als nötig abwechslungsweise geöffnet und geschlossen, um den gewünschten Druck in der Reinigungsapparatur aufrecht zu erhalten.

Im Schritt vi) wird das Ventil 13 geschlossen und das Ventil 12 wieder geöffnet. Dabei wird der Druck in der Behandlungskammer auf Atmosphärendruck erhöht. Die Behandlungskammer wird geöffnet, um sie zu entladen. Dann kann ein neuer Reinigungszyklus beim Schritt i) oben begonnen werden.

In der Behandlungskammer kann ein Sieb oder dgl. (nicht gezeigt) vorhanden sein, um verschiedene Größenfraktionen des Behandlungsguts zu trennen.

## Patentansprüche

1. Verfahren zum Aufbereiten und Rückgewinnen von Bitumen (42) und Gesteinskörnungen (41) aus Asphalt (40), bei dem
a) der Asphalt (40) mechanisch zerkleinert wird;
b) der zerkleinerte Asphalt in eine evakuierte oder evakuierbare Behandlungskammer (1) eingebracht wird;
c) die Behandlungskammer (1) evakuiert wird, indem der Druck in der Behandlungskammer (1) auf einen gegenüber dem Umgebungsdruck reduzierten Druck, vorzugsweise 200 mbar oder tiefer, eingestellt wird;
d) die Behandlungskammer (1) dann mindestens einmal mit einem flüssigen organischen Lösungsmittel beaufschlagt wird;
e) anschließend das flüssige organische Lösungsmittel aus der Behandlungskammer (1) abgezogen wird; und danach
f1) das organische Lösungsmittel in der Dampfphase bei dem reduzierten Druck, vorzugsweise einem Druck von 200 mbar oder tiefer, mit einer Temperatur am oder oberhalb des Flammpunktes des organischen Lösungsmittels in die evakuierte Behandlungskammer (1) eingespeist wird; und/oder
f2) flüssiges organisches Lösungsmittel bei dem reduzierten Druck in die Behandlungskammer (1) eingespeist wird, vorzugsweise einem Druck von 200 mbar oder tiefer, höchst vorzugsweise mit einer Temperatur am oder oberhalb des Flammpunktes des organischen Lösungsmittels;
bei dem der reduzierte Druck während der Schritte d) bis f1) oder d) bis f2) in der Behandlungskammer (1) aufrechterhalten wird.

2. Verfahren nach Anspruch 1, bei dem
im Anschluss an Schritt f1) oder f2) das organische Lösungsmittel aus der Behandlungskammer (1) abgezogen wird; und danach die Behandlungskammer (1) mit kaltem oder heißem Wasser, insbesondere heißem Wasser mit einer Temperatur von mindestens etwa 50°C bis 60°C, vorzugsweise mindestens etwa 80°C, höchst vorzugsweise etwa 100°C, und/oder bei einem gegenüber dem Umgebungsdruck erhöhten Druck beaufschlagt wird.

3. Verfahren nach Anspruch 1 oder 2, bei dem
vor Schritt c) die Behandlungskammer (1) mindestens einmal mit einem flüssigen organischen Lösungsmittel unterhalb des Flammpunktes des organischen Lösungsmittels beaufschlagt wird, vorzugsweise bei Umgebungsdruck; oder bei dem
vor Schritt c) die Behandlungskammer (1) evakuiert, vorzugsweise bis zu einem Druck von 200 mbar oder tiefer, und mindestens einmal mit einem flüssigen organischen Lösungsmittel oberhalb des Flammpunktes des organischen Lösungsmittels beaufschlagt wird.

4. Verfahren nach Anspruch 2, bei dem
vor Schritt e) oder Schritt f1) oder Schritt f2) verflüssigtes Bitumen abgeführt und rückgewonnen wird.

5. Verfahren nach Anspruch 4, bei dem das rückgewonnene Bitumen als Brennstoff verwendet wird, insbesondere zum Erwärmen des Wassers gemäß Anspruch 2 oder des Lösungsmittels in Schritt d) und/oder Schritt f1) und/oder Schritt f2) und/oder gemäß Anspruch 3.

6. Verfahren nach einem der Ansprüche 1 bis 5, bei dem,
vorzugsweise vor Schritt b), eine Größenfraktion mit Teilchengröße < 1 mm abgetrennt wird, vorzugsweise mittels eines Siebs, und getrennt behandelt wird, wobei höchst vorzugsweise die abgetrennte und separat behandelte Größenfraktion vor Schritt f1) oder f2) dem restlichen Asphalt wieder beigegeben wird.

7. Verfahren nach einem der Ansprüche 1 bis 6, bei dem,
ein Inneres der Behandlungskammer (1), vorzugsweise während wenigstens einem der Schritte d), f1, f2) oder der Schritte gemäß Anspruch 3 mit Ultraschall beaufschlagt wird.

8. Verfahren nach einem der Ansprüche 1 bis 7, bei dem
während der Schritte c) bis f1), f2) ein absoluter Druck von 125 mbar oder weniger in der Behandlungskammer (1) aufrechterhalten wird.

9. Verfahren nach einem der Ansprüche 1 bis 8, bei dem
das organische Lösungsmittel mehr als 50 Gew.-% eines aliphatischen Kohlenwasserstoffes mit 5 bis 15 Kohlenstoffen, eines aromatischen Kohlenwasserstoffes, einer sauerstoffhaltigen organischen Verbindung, eines zyklischen Siloxans oder einer Mischung von zwei oder mehr solcher Verbindungen enthält, bezogen auf das Gesamtgewicht des organischen Lösungsmittels.

10. Verfahren nach einem der Ansprüche 1 bis 9, bei dem
das organische Lösungsmittel halogenfrei ist und/oder bei dem das organische Lösungsmittel einen Flammpunkt von 10°C bis 100°C hat.

11. Verfahren nach einem der Ansprüche 1 bis 10, bei dem
nach der Reinigung in der Dampfphase die Asphalt-Rückstände, insbesondere die Gesteinskörnungen, in einem weiteren Schritt getrocknet werden, worin der Absolutdruck in der Behandlungskammer auf die Hälfte oder weniger des Druckes reduziert wird, der während der Reinigung in der Dampfphase, insbesondere während der Schritte c) bis f), aufrechterhalten wird.

12. Apparatur zur Durchführung des Verfahrens nach einem der Patentansprüche 1 bis 11 umfassend wenigstens eine zur Aufnahme von zerkleinertem Asphalt ausgebildete evakuierte oder evakuierbare Behandlungskammer (1, 1a), einen Verdampfer (4), einen Kondensator (6) und eine Vakuumpumpe (7) sowie einen oder mehrere Vorratsbehälter (2, 3) für flüssiges Lösungsmittel, die durch Rohrleitungen und Ventile verbunden sind,
**dadurch gekennzeichnet, dass**
der Behandlungskammer (1, 1a) eine Zerkleinerungs-Vorrichtung (30) für die mechanische Zerkleinerung des Asphalts (40) vorgeschaltet ist; und
dass die Apparatur dazu ausgebildet ist, dass ein gegenüber dem Umgebungsdruck reduzierter Druck, vorzugsweise ein Druck von 200 mbar oder weniger, zumindest in der Behandlungskammer (1) und vorzugsweise in der gesamten Anlage aufrechterhalten ist, während eine aufeinanderfolgende Spülung der Behandlungskammer (1) mit flüssigem und/oder mit verdampftem Lösungsmittel durchgeführt wird.

13. Apparatur nach Anspruch 12, weiterhin umfassend wenigstens eine Zuleitung oder einen Vorratsbehälter (31) für Wasser, insbesondere heißes Wasser (hW), in fluidtechnischer Wirkverbindung mit der Behandlungskammer (1) und/oder einer Vor-Behandlungskammer (1a) für den zerkleinerten Asphalt.

14. Apparatur nach Anspruch 12 oder 13, weiterhin umfassend eine Abführ-Vorrichtung (32) für aufschwimmendes, flüssiges Bitumen (fB) aus der Behandlungskammer (1) und/oder der Vor-Behandlungskammer (1a).

15. Apparatur nach Anspruch 14, weiterhin umfassend eine thermische Verwertungseinrichtung (33) für das aus der Behandlungskammer (1) und/oder der Vor-Behandlungskammer (1a) abgeführte Bitumen (fB), insbesondere zur Erwärmung des Wassers (hW) gemäß Anspruch 13.

## Claims

1. Method for separating and recovering bitumen (42) and aggregates (41) from asphalt (40), wherein
a) the asphalt (40) is mechanically comminuted;
b) the comminuted asphalt is introduced into an evacuated or evacuable treatment chamber (1);
c) the treatment chamber (1) is evacuated by adjusting the pressure in the treatment chamber (1) to a pressure that is reduced relative to ambient pressure, preferably 200 mbar or lower;
d) the treatment chamber (1) is then acted upon at least once by a liquid organic solvent;
e) the liquid organic solvent is subsequently removed from the treatment chamber (1); and then
f1) the organic solvent in the vapour phase is fed into the evacuated treatment chamber (1) at the reduced pressure, preferably a pressure of 200 mbar or lower, at a temperature at or above the flash point of the organic solvent; and/or
f2) liquid organic solvent is fed into the treatment chamber (1) at the reduced pressure, preferably a pressure of 200 mbar or lower, most preferably at a temperature at or above the flash point of the organic solvent;
the reduced pressure being maintained in the treatment chamber (1) during steps d) to f1) or d) to f2).

2. Method according to claim 1, wherein
following step f1) or f2), the organic solvent is removed from the treatment chamber (1); and then the treatment chamber (1) is acted upon by cold or hot water, especially hot water at a temperature of at least about 50°C to 60°C, preferably at least about 80°C, most preferably about 100°C, and/or at a pressure that is elevated relative to ambient pressure.

3. Method according to claim 1 or 2, wherein
prior to step c), the treatment chamber (1) is acted upon at least once by a liquid organic solvent below the flash point of the organic solvent, preferably at ambient pressure; or wherein
prior to step c), the treatment chamber (1) is evacuated, preferably to a pressure of 200 mbar or lower, and is acted upon at least once by a liquid organic solvent above the flash point of the organic solvent.

4. Method according to claim 2, wherein
prior to step e) or step f1) or step f2), liquefied bitumen is discharged and recovered.

5. Method according to claim 4, wherein the recovered bitumen is used as fuel, especially for heating the water according to claim 2 or the solvent in step d) and/or step f1) and/or step f2) and/or according to claim 3.

6. Method according to any one of claims 1 to 5, wherein
preferably prior to step b), a size fraction having a particle size < 1 mm is separated, preferably by means of a screen, and treated separately, the separated and separately treated size fraction most preferably being added to the residual asphalt again prior to step f1) or f2).

7. Method according to any one of claims 1 to 6, wherein
an interior of the treatment chamber (1) is acted upon by ultrasound, preferably during at least one of steps d), f1, f2) or the steps according to claim 3.

8. Method according to any one of claims 1 to 7, wherein
during steps c) to f1), f2), an absolute pressure of 125 mbar or less is maintained in the treatment chamber (1).

9. Method according to any one of claims 1 to 8, wherein
the organic solvent contains more than 50 % by weight of an aliphatic hydrocarbon having from 5 to 15 carbon atoms, of an aromatic hydrocarbon, of an oxygen-containing organic compound, of a cyclic siloxane or of a mixture of two or more such compounds, based on the total weight of the organic solvent.

10. Method according to any one of claims 1 to 9, wherein
the organic solvent is halogen-free and/or wherein the organic solvent has a flash point of from 10°C to 100°C.

11. Method according to any one of claims 1 to 10, wherein
after the cleaning in the vapour phase, the asphalt residues, especially the aggregates, are dried in a further step, wherein the absolute pressure in the treatment chamber is reduced to half or less of the pressure maintained during the cleaning in the vapour phase, especially during steps c) to f).

12. Apparatus for carrying out the method according to any one of patent claims 1 to 11, comprising at least one evacuated or evacuable treatment chamber (1, 1a) configured for receiving comminuted asphalt, a vaporiser (4), a condenser (6) and a vacuum pump (7) as well as one or more storage containers (2, 3) for liquid solvent, which are connected by pipelines and valves,
**characterised in that**
upstream of the treatment chamber (1, 1a) there is arranged a comminution device (30) for the mechanical comminution of the asphalt (40); and the apparatus is configured so that a pressure that is reduced relative to ambient pressure, preferably a pressure of 200 mbar or less, is maintained at least in the treatment chamber (1) and preferably in the entire system while successive flushing of the treatment chamber (1) with liquid and/or vaporised solvent is carried out.

13. Apparatus according to claim 12, further comprising at least one supply line or a storage container (31) for water, especially hot water (hW), in operative fluidic communication with the treatment chamber (1) and/or a pre-treatment chamber (1a) for the comminuted asphalt.

14. Apparatus according to claim 12 or 13, further comprising a discharge device (32) for floating, liquid bitumen (fB) from the treatment chamber (1) and/or from the pre-treatment chamber (1a).

15. Apparatus according to claim 14, further comprising a thermal utilisation device (33) for the bitumen (fB) discharged from the treatment chamber (1) and/or from the pre-treatment chamber (1a), especially for heating the water (hW) according to claim 13.

## Revendications

1. Procédé de préparation et de recyclage de bitumes (42) et de granulats de roche (41) à partir d'asphalte (40), dans lequel
a) l'asphalte (40) est broyé mécaniquement ;
b) l'asphalte broyé est introduit dans une chambre de traitement (1) mise sous vide ou pouvant être mise sous vide ;
c) la chambre de traitement (1) est mise sous vide en réglant la pression dans la chambre de traitement (1) à une pression réduite par rapport à la pression environnante, de préférence à une pression de 200 mbar ou inférieure ;
d) la chambre de traitement (1) est ensuite alimentée au moins une fois avec un solvant organique fluide ;
e) ensuite, le solvant organique fluide est retiré de la chambre de traitement (1) ; puis
f1) le solvant organique est injecté en phase vapeur à la pression réduite dans la chambre de traitement (1) mise sous vide, de préférence à une pression de 200 mbar ou inférieure, à une température du point d'éclair du solvant organique ou au-dessus ;
f2) du solvant organique fluide est injecté à la pression réduite dans la chambre de traitement (1), de préférence à une pression de 200 mbar ou inférieure, de manière la plus préférée à une température du point d'éclair du solvant organique ou au-dessus ;
dans lequel la pression réduite est maintenue dans la chambre de traitement (1) pendant les étapes d) à f1) ou d) à f2).

2. Procédé selon la revendication 1, dans lequel
à la suite de l'étape f1) ou f2), le solvant organique est retiré de la chambre de traitement (1) ; et après cela, la chambre de traitement (1) est alimentée avec de l'eau froide ou chaude, en particulier de l'eau chaude à une température d'au moins 50 °C à 60 °C environ, de préférence d'au moins 80 °C environ, de manière la plus préférée de 100 °C environ, et/ou à une pression élevée par rapport à la pression environnante.

3. Procédé selon la revendication 1 ou 2, dans lequel avant l'étape c), la chambre de traitement (1) est alimentée au moins une fois avec un solvant organique fluide sous le point d'éclair du solvant organique, de préférence à une pression environnante ; ou dans lequel avant l'étape c), la chambre de traitement (1) est mise sous vide, de préférence jusqu'à une pression de 200 mbar ou inférieure, et est alimentée au moins une fois en un solvant organique fluide au-dessus du point d'éclair du solvant organique.

4. Procédé selon la revendication 2, dans lequel
avant l'étape e) ou l'étape f1) ou l'étape f2), du bitume liquéfié est évacué et récupéré.

5. Procédé selon la revendication 4, dans lequel
le bitume récupéré est utilisé en tant que combustible, en particulier pour réchauffer l'eau selon la revendication 2 ou le solvant dans l'étape d) et/ou l'étape f1) et/ou l'étape f2) et/ou selon la revendication 3.

6. Procédé selon l'une des revendications 1 à 5, dans lequel de préférence avant l'étape b), une fraction de taille avec une taille de particules < 1 mm est séparée, de préférence au moyen d'un tamis, et est traitée séparément, dans lequel de manière la plus préférée la fraction de taille séparée et traitée séparément est à nouveau ajoutée à l'asphalte restant avant l'étape f1) ou f2).

7. Procédé selon l'une des revendications 1 à 6, dans lequel un espace intérieur de la chambre de traitement (1) est soumis à des ultrasons de préférence pendant au moins une des étapes d), f1), f2) ou les étapes selon la revendication 3.

8. Procédé selon l'une des revendications 1 à 7, dans lequel une pression absolue de 125 mbar ou inférieure est maintenue dans la chambre de traitement (1) pendant les étapes c) à f1), f2).

9. Procédé selon l'une des revendications 1 à 8, dans lequel le solvant organique contient plus de 50 % en poids par rapport au poids total du solvant organique d'un hydrocarbure aliphatique avec 5 à 15 atomes de carbone, d'un hydrocarbure aromatique, d'un composé organique contenant de l'oxygène, d'un siloxane cyclique ou d'un mélange de deux ou plus de ces composés.

10. Procédé selon l'une des revendications 1 à 9, dans lequel le solvant organique est sans halogène et/ou dans lequel le solvant organique présente un point d'éclair de 10 °C à 100 °C.

11. Procédé selon l'une des revendications 1 à 10, dans lequel après le nettoyage dans la phase vapeur, les résidus d'asphalte, en particulier les granulats de roche, sont séchés dans une autre étape dans laquelle la pression absolue dans la chambre de traitement est réduite à la moitié ou moins de la pression qui est maintenue dans la phase vapeur pendant le nettoyage, en particulier pendant les étapes c) à f).

12. Appareil pour la mise en oeuvre du procédé selon l'une des revendications 1 à 11 comprenant au moins une chambre de traitement (1, 1a) mise sous vide ou pouvant être mise sous vide réalisée pour recevoir de l'asphalte broyé, un évaporateur (4), un condensateur (6) et une pompe sous vide (7) ainsi qu'un ou plusieurs réservoirs (2, 3) pour du solvant fluide, qui sont reliés par des conduites et des vannes,
**caractérisé en ce que**
un dispositif de broyage (30) pour le broyage mécanique de l'asphalte (40) est installé en amont de la chambre de traitement (1, 1a) ; et que l'appareil est réalisé pour qu'une pression réduite par rapport à la pression environnante, de préférence une pression de 200 mbar ou inférieure, soit maintenue au moins dans la chambre de traitement (1) et de préférence dans la totalité de l'installation tandis qu'un rinçage consécutif de la chambre de traitement (1) avec un solvant fluide et/ou avec un solvant évaporé est mis en oeuvre.

13. Appareil selon la revendication 12, comprenant par ailleurs au moins une conduite d'arrivée ou un réservoir (31) pour de l'eau, en particulier de l'eau chaude (hW) en liaison fonctionnelle par une technique des fluides avec la chambre de traitement (1) et/ou une chambre de pré-traitement (1a) pour l'asphalte broyé.

14. Appareil selon la revendication 12 ou 13, comprenant par ailleurs un dispositif d'évacuation (32) hors de la chambre de traitement (1) et/ou de la chambre de pré-traitement (1a) pour du bitume fluide flottant (fB).

15. Appareil selon la revendication 14, comprenant par ailleurs un système d'évaluation thermique (33) pour le bitume (fB) évacué hors de la chambre de traitement (1) et/ou de la chambre de pré-traitement (1a), en particulier pour réchauffer l'eau (hW) selon la revendication 13.
